# EUROPEAN PATENT APPLICATION

(11) **EP 4 282 995 A1**
(43) Date of publication of application: **29.11.2023**
(21) Application number: 22207431.2
(22) Date of filing: 15.11.2022
(51) Int. Cl.: C22B 3/08, C22B 3/22, C22B 3/38, C22B 3/44, C22B 7/00, C22B 3/00, C22B 26/10, C22B 26/12, C22B 47/00, B01D 11/02

(54) **HYDROMETALLURGICAL PROCESS FOR LITHIUM-ION BATTERY WASTE RECYCLING**

(30) Priority: 27.05.2022 US 202217804337
(71) Applicant: II-VI Delaware, Inc., Wilmington, Delaware 19801 (US)
(72) Inventor: Nazari, Ghazaleh, Wilmington, 19801 (US); Abrenica, Gomer, Wilmington, 19801 (US)
(74) Representative: Tegethoff, Sebastian

(57) **Abstract**

Valuable metal compounds and a useful by-product are recovered, with high yield, from lithium-ion battery waste, without otherwise generating effluent. One or more metal sulfate solution may be used to scrub the metals from organic extractants. The sulfates may be produced in one or more evaporation/crystallization units downstream from precipitation and dissolution units. An organic extractant may be used to extract a metal of interest and other metals from feed material, scrub the other metals from the organic extractant, strip the metal of interest from the organic extractant, and recycle the extractant. An evaporation/crystallization unit may be used to output the metal of interest, while a return line transports a metal sulfate mother liquor from the evaporation/crystallization unit (after hydroxide precipitation and dissolution for purification) for use in scrubbing the other metals from the organic extractant after pH and metal concentration adjustment.

## Description

### Field of the Invention

The present disclosure relates generally to a system for recovering a metal of interest. The present disclosure also relates to a hydrometallurgical method for recovering one or more metals from feed material derived from lithium-ion batteries.

### Background of the disclosure

The Lithium-based batteries, especially lithium-ion (Li-ion) secondary (rechargeable) batteries, are being used in electric vehicles (EVs) and other electric power systems. The demand for lithium-ion batteries (LiBs) is high and is expected to increase as markets for electric vehicles and other systems requiring energy storage continue to develop. The demand for certain metals that are used to make lithium-ion batteries is also high and is expected to increase.

Pyrometallurgical processes have been considered for processing lithium-ion batteries that have reached their end-of-life (EOL). These processes involve smelting as a core process step, and present significant hurdles, including high energy consumption, costly toxic gas treatment, and loss of lithium to slag. The technique produces metals in forms that are unsuitable for new battery production, requiring additional processing to produce metal compounds suitable for the intended purpose.

Lately, several hydrometallurgical processes have also been considered to recover lithium (Li), nickel (Ni), and cobalt (Co) from spent lithium-ion batteries, but no such process has been commercially implemented. A hydrometallurgical method of recovering metals from spent lithium-ion batteries is mentioned in United States Patent Application Publication No. 2022/0017989, published January 20, 2022 (*Battery Recycling Process*)*.*

The known metal-recovery processing paths have a number of disadvantages. Challenges that may be encountered in connection with hydrometallurgical processing include high volumes of process effluents, limited adaptability to differences in raw materials, and high reagent consumption. There is a need in the art for a cost effective, environmentally friendly, and efficient process to recover desired metals and other materials from lithium-ion battery waste.

### Summary of the Invention

The present disclosure overcomes the disadvantages of the prior art to a great extent. The present disclosure relates generally to a system for recovering a metal of interest, where the system includes, among other things, a leaching/dissolution reactor, a solvent extraction unit, a precipitation reactor, a dissolution reactor, an evaporation/crystallization unit, and a return line. The extraction unit uses an organic extractant to extract the metal of interest and other metals from feed material, scrub the other metals from the organic extractant, strip the metal of interest from the organic extractant, and recycle the organic extractant. The evaporation/crystallization unit is used to output the metal of interest (after such impurity removal and purification), and the return line transports a metal sulfate mother liquor after impurity removal and purification from the evaporation/crystallization unit to the solvent extraction unit for use in scrubbing the other metals from the organic extractant. According to this aspect of the present disclosure, crystallization preferably occurs after removal of impurities from the strip solution, such that the mother liquor does not contain those impurities.

The present disclosure also relates to a hydrometallurgical method for recovering one or more metals from feed material derived from lithium-ion batteries, where the method includes using an organic extractant to extract a metal of interest and other metals from the feed material, scrubbing the other metals from the organic extractant, subsequently stripping the metal of interest from the organic extractant, and recycling the organic extractant; using an evaporation/crystallization unit to concentrate the solution by evaporating excess water and crystallize the metal of interest from a purified solution, and outputting the metal of interest; and transporting a portion of the metal sulfate mother liquor from the evaporation/crystallization unit and using the mother liquor (after pH and metal concentration adjustment) in the scrubbing of the other metals from the organic extractant. In this case, the crystallization of the metal of interest may be performed after the purification step.

The present disclosure also relates to a hydrometallurgical method for recovering metals, where the method includes using an organic extractant to extract a first metal of interest and other metals from feed material derived from lithium-ion batteries, scrubbing the other metals from the organic extractant, stripping the metal of interest from the organic extractant, and recycling the organic extractant; using an evaporation/crystallization unit to concentrate the solution by evaporating excess water and crystallize the first metal of interest from a purified solution, and outputting the first metal of interest; and transporting a metal sulfate from the evaporation/crystallization unit and using a portion of the metal sulfate solution (after pH and metal concentration adjustment) in the scrubbing of the other metals from the organic extractant. The method according to this aspect of the present disclosure also includes using a second organic extractant to extract a second metal of interest from the metals scrubbed from the first organic extractant, scrubbing metals from the second organic extractant, stripping the second metal of interest from the second organic extractant, and recycling the second organic extractant; using a second evaporation/crystallization unit to concentrate the solution by evaporating excess water and crystallize the second metal of interest from a purified solution, and outputting the second metal of interest; and subsequently recovering and outputting lithium carbonate and a useful by-product.

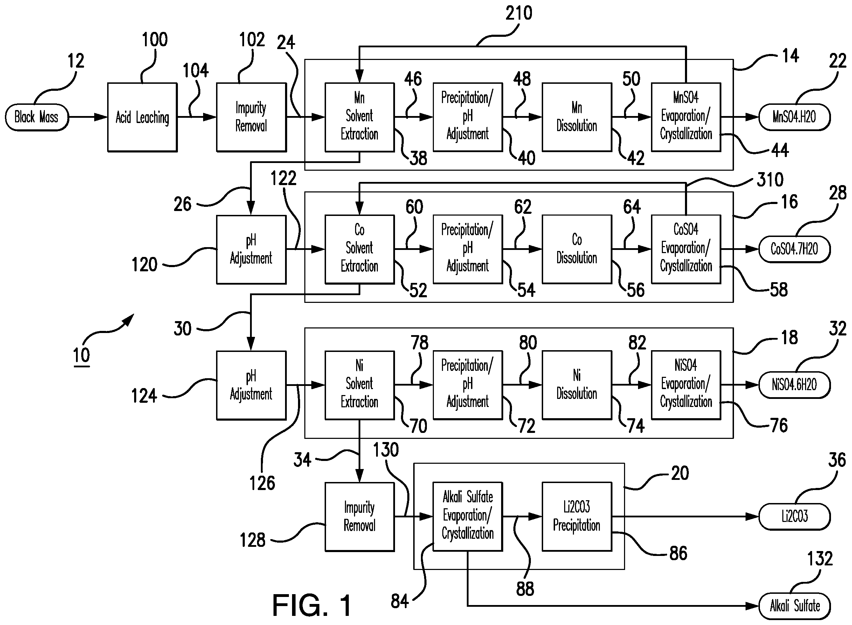

The present disclosure is not necessarily limited to recovery of just first and second metals of interest plus lithium. For example, if desired, manganese may be recovered first, then cobalt may be recovered second, and then nickel may be recovered third (after the recovery of cobalt). The detailed description section of this application describes a process in which all of the metals illustrated in FIG. 1 are separated and purified. However, if desired, one or more of the recovery steps may be bypassed or combined depending on customer requirements, product specifications, and other considerations.

For example, according to one aspect of the present disclosure, if there is no interest in recovery of manganese, or for other reasons, manganese may be removed along with other impurities before solvent extraction (SX) of cobalt is performed. In this way, solvent extraction of manganese can be bypassed. Bypassing a manganese recovery step may be advantageous, for example, where the feed material does not contain manganese, or where for some other reason it is not desired to perform solvent extraction of manganese. Similarly, if there is no cobalt in the feed material, or there is some other reason why solvent extraction of cobalt is not desired, then solvent extraction of cobalt may be bypassed.

The foregoing summary is not intended to summarize each potential embodiment or every aspect of the present disclosure.

### Summary of the Figures

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention, in which:
FIG. 1 FIG. 1 is a schematic view of a system for recovering one or more metals from feed material obtained from spent lithium-ion batteries; the illustrated system may be used for separation and purification of manganese, cobalt, nickel, and lithium, although depending on the feed composition, product specification and requirements, one or more of the steps described in connection with the system may be bypassed or combined;
FIG. 2 is a schematic view of a manganese solvent extraction unit of the system illustrated in FIG. 1;
FIG. 3 is a schematic view of a cobalt solvent extraction unit of the system illustrated in FIG. 1;
FIG. 4 is a graph of percentage values of scrubbed cobalt at different pH values, comparing the use of a metal sulfate solution to the use of a sulfuric acid solution after one stage of scrubbing, in connection with the system illustrated in FIGS. 1 and 2;
FIG. 5 is a graph of percentage values of scrubbed nickel at different pH values, comparing the use of a metal sulfate solution to the use of a sulfuric acid solution after one stage of scrubbing, in connection with the system illustrated in FIGS. 1 and 2; and
FIG. 6 is a graph of percentage values of scrubbed lithium at different pH values, comparing the use of a metal sulfate solution to the use of a sulfuric acid solution after one stage of scrubbing, in connection with the system illustrated in FIGS. 1 and 2.

### Detailed Description of the Disclosure

The technical problem is solved by the independent claims. The dependent claims cover further specific embodiments of the invention.

The The present disclosure relates to a hydrometallurgical method for processing black mass derived from cathodes, anodes, and other components of lithium-ion batteries (LiBs). The method may be used to recover valuable metals and other materials from the black mass. At least some of the recovered metals may be important or critical to the production of new lithium-ion batteries and other products. The method may include, as an initial step, using acid to leach the black mass and solubilize most of the metals of interest in the black mass along with some impurities. After filtering off the insoluble materials, the acid-leached solution is chemically treated to remove impurities and generate a mixed metal solution.

The acid-leached solution may be subjected to a series of purification and separation steps for efficient recovery of individual metals. The recovered metals may be directed into respective product streams. If desired, purified solutions are subjected to precipitation and/or evaporation/crystallization processes to produce battery-grade lithium (Li), nickel (Ni), cobalt (Co), and manganese (Mn) compounds. A by-product (that is, a residual product) of the method described herein may be one or more of an alkaline or ammonium-based compound which may have value in other industries including pulp and paper manufacturing, and fertilizer production. As used herein the term "evaporation/crystallization" refers to a two-step process in which evaporation occurs first and crystallization occurs second. Vapor generated during the evaporation process may be condensed and utilized elsewhere in the system. The crystallization process may involve a cooling process which does not generate vapor.

The present disclosure offers a number of advantages. According to one aspect of the present disclosure, a portion of the mother liquor from an evaporation/crystallization process is returned to an upstream process and after pH and metal concentration adjustment is used to scrub impurities from an organic phase. According to this preferred aspect of the present disclosure, the mother liquor contains a metal sulfate containing a metal of interest (the metal of interest is the one that is recovered by the evaporation/crystallization process). The mother liquor-returning step may reduce the need to provide fresh reagent (including acid and base), leading to more efficient operation of the metals recovery process, and it may also improve the metals recovery yield. If fresh reagent including an acid is provided, at some point in the process the acid may need to be neutralized by a base.

By way of example, in a first solvent extraction (SX) stage, where the goal is to load manganese (a metal of interest in this case) on an organic phase, there may be some cobalt loading (an example of an impurity in this case) as well, such that the loaded cobalt has to be scrubbed from the organic phase before the manganese is stripped from the organic phase. Although acid may be used to scrub the cobalt and other impurities from the organic phase, such acid scrubbing involves extra cost, fresh acid and base consumption, and a lower yield of manganese, as some of the manganese may be scrubbed from the organic phase along with the cobalt.

Thus, according to the present disclosure, a portion of the mother liquor from a manganese sulfate evaporation/crystallization process may be transported upstream to a manganese scrubbing unit after pH and metal concentration adjustment. As discussed in more detail below, use of manganese sulfate in this way results in the replacement of loaded cobalt with manganese, such that the amount of the reagent required may be reduced and the yield of manganese may be increased.

Then, in a second stage of solvent extraction, where the goal is to load cobalt (a second metal of interest) in an organic phase, there may be some nickel loading as well, and the nickel and other impurities have to be scrubbed before the cobalt is stripped. According to the present disclosure, a portion of the mother liquor from a cobalt sulfate evaporation/crystallization process may be transported to an upstream process of the cobalt extraction line after pH and metal concentration adjustment, such that loaded nickel is replaced by cobalt, and the nickel and other impurities are output as raffinate. The amount of the reagent required may thereby be reduced and the yield of cobalt may be increased.

According to another advantageous aspect of the present disclosure, the metals-recovery process is configured such that all, or substantially all, materials derived from the black mass are captured for recycling or other uses. According to this aspect of the present disclosure, effluent discharge from the system can be eliminated or minimized. According to this aspect of the present disclosure, a by-product (that is, a residual product) of the metals-recovery process may be an alkali sulfate, such as sodium sulfate decahydrate (H₂₀Na₂O₁₄S, or Glauber's salt) or ammonium sulfate, both of which have value in the agricultural industry, as fertilizer, and elsewhere. Thus, the present disclosure may be implemented in a way that generates minimal solid waste, and battery-grade materials can be produced without diminishing recovery or imposing high processing or reprocessing requirements.

Referring now to the drawings, FIG. 1 illustrates an example of a system 10 for recovering one or more metals from feed material 12. The feed material 12 may be, for example, a black mass derived from cathode and anode materials of lithium-ion battery waste. The feed material 12 may contain lithium and one or more of manganese, cobalt, nickel, and other materials, including other metals and non-metals. The illustrated system 10 has a manganese extraction line 14, a cobalt extraction line 16, a nickel extraction line 18, and a lithium extraction line 20. The metals of interest to be extracted by the illustrated manganese extraction line 14, the cobalt extraction line 16, and the nickel extraction line 18 are manganese, cobalt, and nickel, respectively.

The feed material 12 may include one or more materials derived from spent batteries (that is, batteries at their end of life), or from scrap material generated during battery manufacturing processes. The term "waste" material, as used herein, includes one or more materials derived from spent batteries and scrap material generated during a manufacturing process.

In the illustrated configuration, the manganese extraction line 14 extracts manganese sulfate (MnSO₄.H₂O (a white, powdery or granular material)) 22 from a purified pregnant leach solution (PLS) derived from the feed material 12. The pregnant leach solution may be transported to the manganese extraction line 14 via a transport line 24, and the extraction line 14 may output a cobalt/nickel/lithium raffinate via another transport line 26.

The illustrated cobalt extraction line 16 extracts cobalt sulfate (CoSO₄.7H₂O (a red, powdery or granular material)) 28 from the cobalt/nickel/lithium raffinate, and outputs a nickel/lithium raffinate via another transport line 30. The nickel extraction line 18 may be used, in turn, to extract nickel sulfate (NiSO₄.6H₂O ( blue-green, powdery or granular material)) 32 from the nickel/lithium raffinate, and output a lithium raffinate via another transport line 34. Finally, the lithium extraction line 20 may be used to extract lithium carbonate (Li₂CO₃ (a white, powdery or granular material)) 36 from a purified solution derived from the lithium raffinate. The transport lines 24, 26, 30, 34 may include, for example, one or more fluid conduits or conveyors.

In the illustrated configuration, the manganese extraction line 14 includes a solvent extraction unit 38, a precipitation/pH adjustment unit 40, a dissolution unit 42, and an evaporation/crystallization unit 44. The solvent extraction unit 38, the precipitation/pH adjustment unit 40, the dissolution unit 42, and the evaporation/crystallization unit 44 may be connected to each other, in series, by suitable transport lines 46, 48, 50 each of which may include, for example, one or more fluid conduits or conveyors. Alternatively, if desired, processes that might be performed sequentially in two or more of the units 38, 40, 42, 44 may be performed by batch processing in a single reactor or unit. The term "unit," as used herein, means one or more suitable reaction vessels or tanks connected or connectable to suitable input and output flow conduits or conveyors, and, unless otherwise indicated by context, two or more units may be implemented in a single reaction vessel or tank.

The cobalt extraction line 16 may include a cobalt solvent extraction unit 52, a precipitation/pH adjustment unit 54, a cobalt dissolution unit 56, and a cobalt sulfate evaporation/crystallization unit 58. The solvent extraction unit 52, the precipitation/pH adjustment unit 54, the dissolution unit 56, and the evaporation/crystallization unit 58 of the cobalt extraction line 16 may be connected to each other, in series, by suitable transport lines 60, 62, 64 each of which may include, for example, one or more fluid conduits or conveyors. If desired, processes that might be performed sequentially in two or more of the units 52, 54, 56, 58 of the cobalt extraction line 16 may be performed by batch processing in a single reactor or unit.

The illustrated nickel extraction line 18 includes a nickel solvent extraction unit 70, a precipitation/pH adjustment unit 72, a nickel dissolution unit 74, and a nickel sulfate evaporation/crystallization unit 76. The solvent extraction unit 70, the adjustment unit 72, the dissolution unit 74, and the evaporation/crystallization unit 76 of the nickel extraction line 18 may be connected to each other, in series, by suitable transport lines 78, 80, 82 each of which may include, for example, one or more fluid conduits or conveyors. Processes that might be performed sequentially in two or more of the nickel extraction line units 70, 72, 74, 76 may be performed by batch processing in a single reactor or other unit.

Finally, the lithium extraction line 20 may include an alkali sulfate evaporation/crystallization unit 84 and a lithium carbonate precipitation unit 86. The two units 84, 86 are connected to each other by a suitable transport line 88 which may include, for example, one or more fluid conduits or conveyors. If desired, multiple processes that might be performed in the lithium extraction line 20 may be performed by batch processing in a single reactor or other unit.

In operation, a suitable acid, such as sulfuric acid, may be added to the black mass 12 in an acid leaching unit 100 to produce a pregnant leach solution. An impurity removal unit 102 receives the pregnant leach solution via a suitable transport line 104. The pregnant leach solution is purified in the impurity removal unit 102, and the resulting purified pregnant leach solution is transported (via line 24) to the manganese solvent extraction unit 38 of the manganese extraction line 14.

As discussed in more detail below, the manganese solvent extraction unit 38 produces a manganese strip solution which is transported (via line 46) to the precipitation/pH adjustment unit 40. Manganese hydroxide (Mn(OH)₂) is produced in the adjustment unit 40 and transported (48) to the manganese dissolution unit 42 which produces a manganese solution. The evaporation/crystallization unit 44 receives (via line 50) the manganese solution, removes water from the solution, and outputs the manganese sulfate 22 and a manganese sulfate mother liquor (for a use discussed in more detail below). In the illustrated configuration, after crystallization in the evaporation/crystallization unit 44, the resulting slurry is filtered. The manganese sulfate mother liquor includes at least a portion of the filtrate diluted with water. The mother liquor may be pH-adjusted with sulfuric acid and then used for scrubbing in the corresponding extraction unit 38.

The cobalt/nickel/lithium raffinate of the manganese extraction line 14 is subjected to pH adjustment by a pH adjustment unit 120 and output, via a suitable transport line 122, to the solvent extraction unit 52 of the cobalt extraction line 16. As discussed in more detail below, the cobalt solvent extraction unit 52 produces a cobalt strip solution which is transported (via line 60) to the corresponding precipitation/pH adjustment unit 54. Cobalt hydroxide (Co(OH)₂) is produced in the adjustment unit 54 and transported (via line 62) to the cobalt dissolution unit 56 which produces a cobalt solution. The cobalt sulfate evaporation/crystallization unit 58 receives (from line 64) the cobalt solution and outputs a filtrate (the cobalt sulfate 28) and a cobalt sulfate mother liquor.

The nickel/lithium raffinate of the cobalt extraction line 16 is subjected to pH adjustment by an adjustment unit 124 and output, via a suitable transport line 126, to the solvent extraction unit 70 of the nickel extraction line 18. The nickel solvent extraction unit 70 produces a nickel strip solution which is transported (via line 78) to the corresponding precipitation/pH adjustment unit 72. Nickel hydroxide (Ni(OH)₂) is produced in the adjustment unit 72 and transported (via line 80) to the nickel dissolution unit 74 which produces a nickel solution. The nickel sulfate evaporation/crystallization unit 76 receives (from line 82) the nickel solution and outputs nickel sulfate 32.

Impurities within the lithium raffinate of the nickel extraction line 18 are removed by an impurity removal unit 128. The resulting purified lithium solution is output, via a suitable transport line 130, to the lithium extraction line 20. The alkali sulfate evaporation/crystallization unit 84 outputs alkali sulfate 132, for example, as a by-product of the system 10. The lithium carbonate precipitation unit 86 receives a lithium solution from the alkali sulfate evaporation/crystallization unit 84 via the corresponding transport line 88 and outputs lithium carbonate 36.

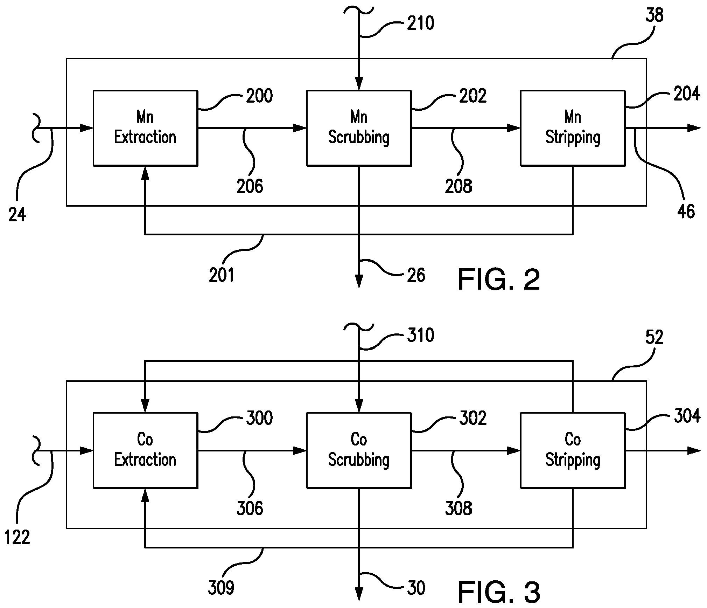

Referring now to FIG. 2, the manganese solvent extraction unit 38 of the manganese extraction line 14 (FIG. 1) includes a manganese extraction unit 200 (FIG. 2), a manganese scrubbing unit 202, and a manganese stripping unit 204. The three units 200, 202, 204 may be operatively connected in series by suitable transport lines 206, 208 which may be, for example, one or more fluid conduits or conveyors. Alternatively, the units 200, 202, 204 may be consolidated for batch processing in one or more suitable reactors or other units.

In operation, the purified pregnant leach solution is transported (via line 24) into the manganese extraction unit 200 where a suitable organic extractant is added to the purified pregnant leach solution, via a recycle line 201, to produce a loaded organic phase. A corresponding transport line 206 may be used to output the loaded organic phase to the manganese scrubbing unit 202. The organic extractant may be a suitable organic compound dissolved in an organic solvent. The organic compound may have, for example, an available proton which can be exchanged with a metal ion from the aqueous pregnant leach solution. The organic extractant may be any suitable material, including, for example, a phosphoric acid type organic extractant, such as Di-(2-ethylhexyl)phosphoric acid (D2EHPA).

The loaded organic phase is subjected to scrubbing in the manganese scrubbing unit 202 which outputs (via line 208) a scrubbed organic material to the manganese stripping unit 204. In the scrubbing unit 202, the loaded extractant contacts a scrub solution (discussed in more detail below) which displaces some impurity elements that are loaded onto the extractant in the manganese extraction unit 200. The organic extractant in the loaded organic material is enriched with various metal ions (including, in the illustrated process, manganese, cobalt, nickel, and lithium) from the aqueous pregnant leach solution.

The scrubbing unit 202 purifies the loaded extractant such that at least some undesired elements, including cobalt, are removed (and output with the cobalt/nickel/lithium raffinate via line 26). In the manganese stripping unit 204, a stripping solution, which may be sulfuric acid, or another suitable diluted or concentrated acidic or basic solution, is added to the scrubbed organic material to transfer manganese (the metal of interest in this case) from the loaded extractant to an aqueous phase. The stripped organic extractant is recycled, via the recycling line 201, from the manganese stripping unit 204 to the manganese extraction unit 200 for further use.

In the solvent extraction process illustrated in FIG. 2, the acidity of the in-process material decreases as it moves from the manganese extraction unit 200, to the scrubbing unit 202, and then to the stripping unit 204. The loading on the organic extractant increases as acidity decreases. Therefore, the highest pH (lowest acidity) is in the extraction unit 200. Then, in the scrubbing unit 202, acidity is slightly increased to remove impurities. Finally, in the stripping unit 204, acidity is further increased to fully remove manganese (the metal of interest) from the organic phase.

In the illustrated configuration, the manganese scrubbing unit 202 (not the manganese stripping unit 204) receives, via a suitable recycle line 210, the manganese sulfate mother liquor that is output by the manganese sulfate evaporation/crystallization unit 44 (FIG. 1). The manganese scrubbing unit 202 (FIG. 2) uses the mother liquor to perform the scrubbing process. During extraction, the organic material co-extracts some impurities along with manganese. The mother liquor which contains solely the metal of interest (manganese in this case, and no other metals) is used to displace the impurities from the organic material during scrubbing in the scrubbing unit 202. The benefits of including the manganese sulfate mother liquor in the scrub solution employed in the scrubbing unit 202 include increased purity of the output product 22 (FIG. 1) and reduced loss of the metal of interest from the organic phase without adversely affecting the size or other mechanical aspects of the manganese extraction line 14.

If acid, such as sulfuric acid, alone were used to scrub impurities from the organic phase in the manganese scrubbing unit 202, scrubbing of a portion of the loaded metal of interest (manganese in this case) could occur. The resulting loss of manganese to the corresponding transport line 26 would reduce the desired metal recovery of the system 10. Scrubbing with acid alone would also disadvantageously increase the required consumption of reagent (acid and subsequently base). Table 1 below provides data to compare (1) impurity removal in the scrubbing unit 202 using a manganese sulfate solution and (2) impurity removal using a sulfuric acid solution (without any manganese sulfate), in both cases at pH = 2. In the latter case, about 50% of the manganese present in the organic phase before scrubbing was scrubbed out of the organic phase together with other impurities (cobalt, lithium, and nickel) [(2,284 ppm - 1,181 ppm) ÷ 2,284 ppm = 48%]. However, this was not the case when the preferred manganese sulfate solution was used (2,508 ppm > 2,284 ppm).

**TABLE 1**

| ***METAL*** | ***CONCENTRATION IN ORGANIC PHASE, PPM*** | | |
|---|---|---|---|
| | ***BEFORE SCRUBBING*** | ***AFTER MNSO4 SCRUBBING AT PH 2*** | ***AFTER H2SO4 SCRUBBING AT PH 2*** |
| *Co* | *113* | *0* | *11* |
| *Li* | *62* | *7* | *9* |
| *Mn* | *2,284* | *2,508* | *1,181* |
| *Ni* | *24* | *6* | *8* |

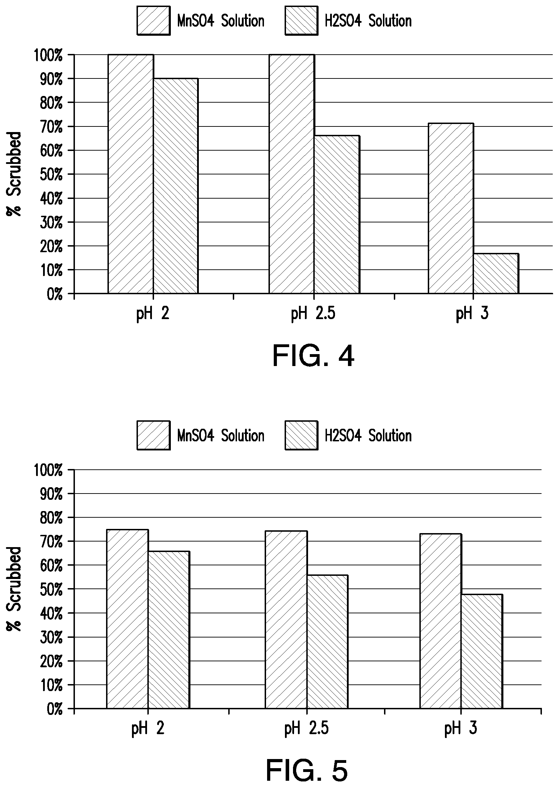

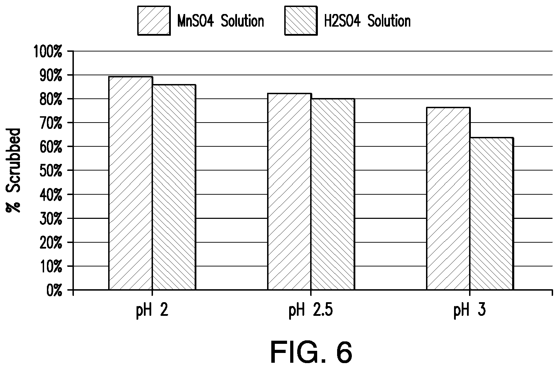

FIGS. 4-6 are graphs which show improved removal efficiency for cobalt, nickel, and lithium, respectively, at various pH values, comparing use of the manganese sulfate solution in the manganese extraction line 14, to use of sulfuric acid to scrub organic material in a manganese extraction line.

Thus, according to the present disclosure, the concentration of the scrub solution applied in the manganese scrubbing unit 202 is optimized to maximize removal of impurities (output via line 26) while minimizing the volumetric flow rate of the recycle stream. The volumetric flow rate of the recycle stream (through line 210) affects the overall size and complexity of the manganese extraction line 14. In general, the greater the size of the solvent extraction (SX) system, the greater the capital and other costs needed to implement and operate the system 10.

Therefore, it is advantageous to reduce the flow rate of the recycle stream relative to the rate at which manganese sulfate 22 is recovered. If the concentration of the recycle stream is too high, then an excess amount of the metal of interest (manganese in the case of the manganese extraction line 14) will be loaded in the organic phase which would subsequently increase the size of the extraction line 14 and the reagent requirement (including acid) for use in stripping. On the other hand, if the concentration is too low, the efficiency of the scrubbing of impurities by the manganese scrubbing unit 202 may be reduced.

By controlling the concentration of the scrub solution such that it is equal to the concentration of the pregnant leach solution (PLS) entering the manganese solvent extraction unit 38, equilibrium conditions of the organic and aqueous phases can be satisfactorily maintained. In a preferred embodiment of the present disclosure, only so much metal from the recycle stream (received from line 210) is loaded to replace the impurities that are scrubbed (output to line 26). For example, within the manganese solvent extraction unit 38, the concentration of the manganese in the mother liquor from the manganese sulfate evaporation/crystallization unit 44 should preferably be adjusted or maintained to be equal to the concentration of the manganese in the pregnant leach solution that is input (via line 24) to the manganese solvent extraction unit 38.

By establishing or maintaining the desired concentration equilibrium between manganese in the scrub solution and manganese in the pregnant leach solution, the manganese in the scrub solution preferentially replaces only the impurities (cobalt, nickel, lithium, and other metals besides manganese) that are loaded in the organic phase in the extraction unit 200 without increasing the loading of manganese to the organic phase. Since the concentration of manganese in the scrub solution is the same, or nearly the same, as that of the input leach solution, the loading capacity of the organic phase does not change which would otherwise adversely increase the size of the manganese extraction line 14 and downstream processing steps.

Thus, according to one aspect of the present disclosure, the concentration of the metal of interest in the mother liquor that is recycled may be functionally related to the concentration of the metal of interest in the feed material. The effectiveness of the recovery method is improved as the concentration of the metal of interest in the mother liquor approaches (and preferably is equal to) the concentration of the metal of interest in the feed material. If the concentration of the metal of interest in the scrub solution were less than the concentration of the metal of interest in the pregnant leach solution, there would be higher losses of the metal of interest from the organic phase. On the other hand, if the concentration of the metal of interest in the scrub solution were greater than that of the pregnant leach solution, the size of the circuit may have to be increased, which could lead to higher equipment cost.

One of the reasons why the concentration of the metal of interest in the recycled mother liquor should approach (and preferably be equal to) the concentration of the metal of interest in the feed material is because the system 10 (FIG. 1) is configured to operate in a counter current configuration. In the counter current configuration, there may be three stages of extraction (E1, E2, E3). The pregnant leach solution is introduced into the first stage (E1), and the organic material is fed into the third stage (E3). The organic material that exits the first extraction stage (E1) and enters the scrubbing stage (E2) has been in contact with the pregnant leach solution.

Now, if the concentration of the metal of interest in the scrub solution is maintained the same as that in the pregnant leach solution, the loading capacity of the organic material for manganese does not change much, and because the scrubbing solution is more acidic than the pregnant leach solution, some impurities are scrubbed. However, if the concentration of the manganese in the scrub solution is not nearly the same as that in the pregnant leach solution (which could happen if the solution being added to the scrub solution contains sulfuric acid (H₂SO₄) and little or no metal of interest), then, according to Le Châtelier's principle, there would be a significant driving force for metals to move from the organic material to the scrub solution, resulting in significant loss of the metal of interest.

Further, in addition to the concentration of the scrub solution, the pH of the scrub solution may play an important role in improving performance of the scrubbing unit 202. The pH of the scrub solution should be low enough to allow for removal of impurities and yet high enough to avoid removal of the metal of interest (manganese in the case of the illustrated first extraction line 14) from the organic phase. Thus, the desired pH for the scrub solution should preferably be lower than the pH in the extraction unit 200 but higher than the pH in the stripping unit 204.

Referring now to FIG. 3, the cobalt solvent extraction unit 52 of the cobalt extraction line 16 may include a cobalt extraction unit 300, a cobalt scrubbing unit 302, and a cobalt stripping unit 304 operatively connected in series by suitable transport lines 306, 308 which may be, for example, one or more fluid conduits or conveyors. Alternatively, the units 300, 302, 304 may be consolidated for batch processing in one or more reactors or other units.

In operation, the pH-adjusted raffinate from the manganese extraction line 14 is transported, via the corresponding transport line 122, into the cobalt extraction unit 300. In the cobalt extraction unit 300, a suitable organic extractant is added to the raffinate, via a recycle line 309, to generate a loaded organic material which is output to the cobalt scrubbing unit 302 via the corresponding transport line 306.

The organic extractant used in the cobalt extraction line 16 may be any suitable organic compound dissolved in an organic solvent. The organic compound may have, for example, an available proton which can be exchanged with a metal ion from the cobalt/nickel/lithium raffinate. The organic extractant may include, for example, a phosphonic acid type organic extractant, such as a dialkyl phosphinic acid extractant (CYANEX 272) .

The loaded organic material output by the cobalt extraction unit 300 is enriched with metal ions transferred from the raffinate to the organic extractant, and is subjected to scrubbing in the cobalt scrubbing unit 302. In the scrubbing unit 302, the loaded extractant contacts a scrub solution which displaces some impurity elements (including nickel and lithium) from the organic extractant. The resulting scrubbed organic material is output by the scrubbing unit 302 (via line 308) to the cobalt stripping unit 304.

The scrubbing unit 302 purifies the loaded extractant such that at least some undesired elements are removed and transported (via line 30) to the nickel extraction line 18. In the corresponding stripping unit 304, a stripping solution, which may be sulfuric acid, or a suitable diluted or concentrated acid or basic solution, is added to the scrubbed organic material, thereby causing cobalt to be transferred from the loaded extractant to an aqueous phase. The stripped organic extractant is recycled (via line 309) to the extraction unit 300 for further use.

In operation, the cobalt scrubbing unit 302 (not the cobalt stripping unit 304) may receive, via a suitable transport line 310, a cobalt sulfate mother liquor that is output by the cobalt sulfate evaporation/crystallization unit 58. The cobalt scrubbing unit 302 uses the mother liquor from the cobalt sulfate evaporation/crystallization unit 58 to improve the scrubbing process, in a manner corresponding to the process described above in connection with the manganese extraction line 14. During extraction in the cobalt extraction unit 300, the organic co-extracts some impurities (including nickel and lithium) along with the metal of interest that is intended to be loaded (that is, cobalt in this case).

The mother liquor supplied via line 310 contains the metal of interest which displaces the impurities from the organic phase during scrubbing. As in the process described above in connection with the manganese extraction line 14, benefits that may be achieved by the cobalt extraction line 16 include increased purity of the end product (cobalt sulfate 28 in this case) without loss of the metal of interest (to line 30) which could adversely affect the size and complexity of the system 10. If acid were used to scrub impurities from the organic phase rather than the cobalt sulfate mother liquor, scrubbing of a portion of the metal of interest from the organic phase would reduce the metal recovery and increase the required reagent (acid) consumption.

The nickel extraction line 18, similarly to the cobalt extraction line 16, may include a nickel extraction unit (not illustrated in the drawings), a nickel scrubbing unit, and a nickel stripping unit operatively connected in series by suitable transport lines, or the three nickel units may be consolidated for batch processing in one or more reactors or other units. In operation, the pH-adjusted raffinate from the cobalt extraction line 16 is transported, via the corresponding transport line 126, into the nickel extraction unit, where a suitable organic extractant is added to the raffinate, via a recycle line, to generate a loaded organic material which is output to the nickel scrubbing unit via the corresponding transport line. The organic extractant used in the nickel extraction line 18 may be any suitable organic compound dissolved in an organic solvent. The organic compound may have, for example, an available proton which can be exchanged with a metal ion from the nickel/lithium raffinate. The organic extractant may include, for example, phosphoric acid (D2EHPA).

The loaded organic material output by the nickel extraction unit is enriched with metal ions transferred from the raffinate to the organic extractant, and is subjected to scrubbing in the nickel scrubbing unit where the loaded extractant contacts a scrub solution which displaces some impurity elements (including lithium) from the organic extractant. The resulting scrubbed organic material is output by the scrubbing unit to the nickel stripping unit.

The nickel scrubbing unit purifies the loaded extractant such that at least some undesired elements are removed and transported to the lithium extraction line 20. In the corresponding stripping unit, a stripping solution, which may be sulfuric acid, or a suitable diluted or concentrated acid or basic solution, is added to the scrubbed organic material, thereby causing nickel to be transferred from the loaded extractant to an aqueous phase. The stripped organic extractant is recycled to the extraction unit for further use.

In operation, the nickel scrubbing unit (not the nickel stripping unit) may receive, via a suitable transport line, a nickel sulfate mother liquor that is output by the nickel sulfate evaporation/crystallization unit 76. The nickel scrubbing unit uses the mother liquor from the nickel sulfate evaporation/crystallization unit 76 to improve the scrubbing process, in a manner corresponding to the process described above in connection with the cobalt extraction line 16. During extraction in the nickel extraction unit, the organic co-extracts some impurities (including lithium) along with the metal of interest that is intended to be loaded (that is, nickel in this case).

The recycled mother liquor contains the metal of interest which displaces the impurities from the organic phase during scrubbing. As in the process described above in connection with the cobalt extraction line 16, benefits that may be achieved by the nickel extraction line 18 include increased purity of the end product (nickel sulfate 32 in this case) without loss of the metal of interest (to line 34) which could adversely affect the size and complexity of the system 10. If acid were used to scrub impurities from the organic phase rather than the nickel sulfate mother liquor, scrubbing of a portion of the metal of interest from the organic phase would reduce the metal recovery and increase the required reagent (acid) consumption.

The acid concentration and metal concentration of the scrub solution, the importance of which is discussed above, can be effectively controlled according to the present disclosure by using the respective precipitation unit 40, 54, 72 and the respective dissolution unit 42, 56, 74 to perform purification before evaporation/crystallization. During precipitation, metal hydroxides are precipitated out of solution, filtered out, and washed, which neutralizes excess acid and removes entrained impurities from the solid metal hydroxides. The entrained impurities may come from the reagents, such as sodium (Na) or ammonia (NH3) and/or lithium (Li)..

According to the present disclosure, the solid metal hydroxides may be dissolved with a controlled amount of acid before evaporation/crystallization in the respective evaporation/crystallization unit 44, 58, 76. This process makes it possible to produce a battery-grade product and a filtrate that is not highly acidic and which has a metal concentration that can be adjusted to satisfy requirements for scrubbing. Moreover, washing of metal sulfates is not necessary because these products are generated from the conditions stated above which involve neither excess acid nor impurities. Therefore, it is possible to avoid what would otherwise be dissolution of substantial portions of the desired product which would lower the yield of the system 10. In sum, the purification that is performed by the respective precipitation and dissolution units 40, 42, 54, 56, 72, 74 facilitates the production of battery grade products, at high recovery rates, and reduces the need for further processing/re-processing.

According to the present disclosure, the system 10 may be operated in a way which does not generate any effluent that has to be discharged. All waste solutions may be captured and recycled. Residual metals from these solutions are precipitated out by pH adjustment, filtered out, and returned to acid leaching. The filtrate, on the other hand, is sent to an evaporator followed by a crystallizer to recover the alkali sulfates. The evaporated water from the evaporator/crystallizers 44, 58, 76, 84 may be collected and condensed to produce clean water which is reused. The process generates minimal solid waste. The by-product 132 can be used in the agricultural or pulp and paper industries such that the process has minimal adverse environmental impact.

The unique features of the present disclosure may be implemented, if desired, to reduce reagent consumption/cost, reduce impurities, and increase metal recovery, and to generate a useful by-product. The present disclosure is not limited, however, to the details of the various processes described herein.

The present disclosure responds to a pressing need and overcomes substantial problems associated with the prior art. Lithium-ion batteries (LiBs) are expected to have the largest growth in several applications, particularly in electric vehicles (EVs), over the next few years. Driven by rapid technological innovation, increasing environmental and energy concerns, favorable government policies, and growing demand from the renewable-energy sector, a massive technological conversion is accelerating. The demand for LiBs may easily outpace the supply of battery-grade components such as lithium (Li), cobalt (Co), and nickel (Ni) in the near future.

Moreover, the supply chain for these critical metals from primary sources reveals a range of risks including political, security, and business risks associated with their geographic concentration. Demand for critical materials is exceeding the current supply; even with projected additional production, the gap is expected to grow exponentially in coming years. To sustain the growth of the electric vehicle market, there is a need to secure the source of materials needed for production of batteries.

The batteries available for recycling today are mostly from consumer electronics. Most of these batteries are landfilled or disposed of some other way because the related environmental regulations have not been fully developed or implemented in many countries. Additionally, they are highly dispersed in small quantities and scattered in different locations. On the other hand, the earliest generations of electric-vehicle batteries are still in use, as they typically reach their end-of-life (EOL) within ten to twelve years. With the coming surge in demand for lithium-ion batteries in the electric vehicle market, the disposal of spent batteries is expected to ramp up in the next few years. With proactive regulations regarding disposal and collection of spent batteries, recycling of battery materials may provide a significant and reliable supply of valuable metals

The foregoing description of the preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

## Claims

1. A system for recovering a metal of interest, comprising:
- a solvent extraction unit for using an organic extractant to extract the metal of interest and other metals from feed material, scrubbing the other metals from the organic extractant, subsequently stripping the metal of interest from the organic extractant, and recycling the organic extractant;
- an evaporation/crystallization unit, connected to the solvent extraction unit, for outputting the metal of interest; and
- a return line for transporting a metal sulfate mother liquor from the evaporation/crystallization unit to the solvent extraction unit for use in scrubbing the other metals from the organic extractant.

2. The system of claim 1, further comprising a precipitation unit and a dissolution unit, connected between the solvent extraction unit and the evaporation/crystallization unit, for generating and outputting a purified solution to the evaporation/crystallization unit.

3. The system of claim 1, further comprising an extraction line, located downstream from the solvent extraction unit, for receiving a raffinate from the solvent extraction unit, and for recovering and outputting a second metal of interest.

4. The system of claim 1, further comprising an extraction line, located downstream from the solvent extraction unit, for recovering and outputting lithium carbonate and a useful by-product.

5. A hydrometallurgical method for recovering one or more metals from feed material derived from lithium-ion batteries, comprising:
- using an organic extractant to extract a metal of interest and other metals from the feed material, scrubbing the other metals from the organic extractant, subsequently stripping the metal of interest from the organic extractant, and recycling the organic extractant;
- subsequently, using an evaporation/crystallization unit to concentrate the solution by evaporating excess water and crystallize the metal of interest from a purified solution, and outputting the metal of interest; and
- transporting a metal sulfate mother liquor from the evaporation/crystallization unit and using the metal sulfate mother liquor in the scrubbing of the other metals from the organic extractant.

6. The method of claim 5, further comprising using a precipitation unit to produce a metal hydroxide and subsequently dissolving the metal hydroxide to produce the purified solution.

7. The method of claim 5, further comprising using an extraction line to receive a raffinate including the other metals, and recovering a second metal of interest from the raffinate.

8. The method of claim 7, wherein the metal of interest and the other metals are derived from components of the lithium-ion batteries.

9. The method of claim 8, further comprising recovering and outputting lithium carbonate and a useful by-product.

10. The method of claim 5, wherein acidity during the scrubbing of the other metals from the organic extractant is greater than acidity during extraction of the metal of interest and other metals from the feed material, and less than acidity during the stripping of the metal of interest from the organic extractant.

11. The method of claim 5, wherein a concentration of the metal of interest in the mother liquor is functionally related to a concentration of the metal of interest in the feed material, such that effectiveness of the method is improved as the concentration of the metal of interest in the mother liquor approaches the concentration of the metal of interest in the feed material.

12. A hydrometallurgical method for recovering first, second, third, or more metals or groups of metals of interest, the method comprising:
- using a first organic extractant to extract the first metal or metals of interest and other metals from feed material derived from lithium-ion batteries, scrubbing the other metals from the organic extractant, subsequently stripping the metal or metals of interest from the organic extractant, and recycling the organic extractant;
- using a first evaporation/crystallization unit to concentrate the solution by evaporating excess water and crystallize the first metal or metals of interest from a purified solution, and outputting the first metal or metals of interest;
- transporting a portion of metal sulfate mother liquor from the evaporation/crystallization unit and using the metal sulfate solution after required pH and metal concentration adjustment in the scrubbing of the other metals from the organic extractant;
- subsequently, using a second organic extractant to extract the second metal or metals of interest from the raffinate of the first metal or metals of interest extraction, scrubbing metals from the second organic extractant, subsequently stripping the second metal or metals of interest from the second organic extractant, and recycling the second organic extractant;
- using a second evaporation/crystallization unit to concentrate the solution by evaporating excess water and crystallize the second metal or metals of interest from a purified solution, and outputting the second metal or metals of interest; and
- subsequently, recovering and outputting lithium carbonate and a useful by-product.

13. The method of claim 12, wherein the first metal or metals of interest includes cobalt.

14. The method of claim 12, wherein the second metal or metals of interest includes nickel.

15. The method of claim 14, wherein the by-product is an alkali sulfate.

16. The method of claim 12, further comprising transporting a portion of the metal sulfate mother liquor from the second evaporation/crystallization unit and using the metal sulfate solution from the second evaporation/crystallization unit to scrub the second organic extractant.

17. The method of claim 12, further comprising using a precipitation unit to produce a metal hydroxide upstream from the first evaporation/crystallization unit and subsequently dissolving the metal hydroxide to produce the purified solution.
